# EUROPÄISCHE PATENTSCHRIFT

(11) **EP 2 778 026 B1**
(45) Veröffentlichungstag und Bekanntmachung des Hinweises auf die Patenterteilung: **01.02.2017**
(21) Anmeldenummer: 13159573.8
(22) Anmeldetag: 15.03.2013
(51) Int. Cl.: B62D 55/24, B62D 55/26, B62D 55/28

(54) **Laufwerkskette für eine Pistenraupe**
CRAWLER-TRACK FOR A SKI TRAIL GROOMING MACHINE
CHENILLE POUR DAMEUSE

(43) Veröffentlichungstag der Anmeldung: 17.09.2014
(73) Patentinhaber: Kässbohrer Geländefahrzeug AG, 88471 Laupheim (DE)
(72) Erfinder: Schocke, Bernd, 89192 Rammingen (DE)
(74) Vertreter: Patentanwälte Ruff, Wilhelm, Beier, Dauster & Partner mbB

(56) Entgegenhaltungen:
- WO-A1-2005/095191
- US-A- 3 930 689
- US-A- 5 466 056

## Beschreibung

Die Erfindung betrifft eine Laufwerkskette für eine Pistenraupe mit mehreren Kettenbändern, die in Haupt- und Nebenbänder unterteilt sind, sowie mit einer Vielzahl von Kettensteganordnungen, die quer zu den Kettenbändern erstreckt und an den Hauptbändern befestigt sind, wobei die Kettensteganordnungen quer zur Kettenlängsrichtung versetzt zueinander angeordnet und alternierend mit relativ zu den Hauptbändern außen- oder innenliegenden Nebenbändern verbunden sind, und wobei die Kettensteganordnungen mit Spurbügeln versehen sind, die in einer gemeinsamen vertikalen Spurführungsebene angeordnet sind, die versetzt zu einer vertikalen Mittellängsebene der Laufwerkskette vorgesehen ist.

Eine derartige Laufwerkskette ist für eine Pistenraupe zur Schneeoberflächenbearbeitung allgemein bekannt. Siehe z.B. US 5466056 und WO 2005095191. Die Pistenraupe weist au beiden Fahrzeugseiten jeweils eine Laufwerkskette auf, die gemeinsam ein Kettenlaufwerk der Pistenraupe bilden. Jede Laufwerkskette läuft über ein heckseitiges Turasrad sowie über mehrere Laufräder endlos um. Jede Laufwerkskette weist mehrere in Kettenlängsrichtung erstreckte Kettenbänder auf, die in Abstand parallel nebeneinander angeordnet sind und als faserverstärkte Gummibänder ausgeführt sind. Die Laufwerkskette weist unterschiedlich breite Kettenbänder auf. Quer zu den Kettenbändern erstreckt sich über den Umfang der Laufwerkskette verteilt eine Vielzahl von Kettensteganordnungen, die an den Kettenbändern befestigt sind. Jede Kettensteganordnung weist einen außenliegenden Kettensteg sowie einen nach innen ragenden Spurbügel auf, der über das Turasrad und die Laufräder des Kettenfahrwerks geführt ist und so die Spurführung der Laufwerkskette definiert. Jede Kettensteganordnung ist mit mehreren Hauptbändern verbunden. Bei einer Laufwerkskette mit fünf Kettenbändern ist jede Kettensteganordnung mit drei Hauptbändern verbunden, wobei zwei innen- und außenliegende Nebenbänder ergänzend zur Befestigung jeder zweiten Kettensteganordnung dienen. Die Hauptbänder weisen zueinander unterschiedliche Breiten auf. Auch die Nebenbänder weisen zueinander unterschiedliche Breiten auf.

Aufgabe der Erfindung ist es, eine Laufwerkskette der eingangs genannten Art zu schaffen, die eine besonders gleichmäßige Kettenlauffunktion gewährleistet.

Diese Aufgabe wird für eine Laufwerkskette der eingangs genannten Art dadurch gelöst, dass die Kettensteganordnungen durch wenigstens vier Hauptbänder getragen sind, die wenigstens paarweise jeweils die durch die Spurbügel definierte vertikale Spurführungsebene innen- und außenseitig flankieren. Durch die erfindungsgemäße Lösung sind innenseitig - das heißt zur Fahrzeugmitte hin - der Spurführungsebene wie auch außenseitig der Spurführungsebene jeweils mindestens zwei Hauptbänder vorgesehen, an denen alle Kettenstege befestigt sind. In besonders vorteilhafter Weise sind vier Hauptbänder vorgesehen, von denen zwei innenseitig und die anderen zwei außenseitig die Spurführungsebene flankieren. Hierdurch wird trotz der asymmetrischen Kettenführung eine im Wesentlichen gleichmäßige Kräfteverteilung in den Kettenbändern erzielt. Denn dadurch, dass die durch die Spurbügel definierte Spurführungsebene exzentrisch zur Mittellängsebene der Laufwerkskette vorgesehen ist, kann die Gefahr von ungleichen Kräfteverteilungen innerhalb der Kettenbänder entstehen. Durch die erfindungsgemäße Lösung, die zumindest jeweils zwei Hauptbänder beidseitig der Spurführungsebene vorsieht, an denen alle Kettenstege befestigt sind, werden die Hauptlasten über die Kettenstege symmetrisch in die wenigstens vier Hauptbänder verteilt.

Unter Nebenbändern sind die Kettenbänder zu verstehen, an denen nicht jeder Kettensteg der Laufwerkskette befestigt ist. Vorteilhaft ist an Nebenbändern jeder zweite Kettensteg befestigt. Die Hauptbänder sind die Kettenbänder, an denen jeweils jeder Kettensteg der Laufwerkskette befestigt ist, und die zwischen sich die Spurführungsebene mit den Spurbügeln einschließen.

In Ausgestaltung der Erfindung sind die wenigstens paarweise vorgesehenen Hauptbänder symmetrisch beidseitig der Spurführungsebene angeordnet. Dies bedeutet, dass die Hauptbänder gegenüberliegend zur Spurführungsebene jeweils in gleichen Abständen zur Spurführungsebene angeordnet sind.

In weiterer Ausgestaltung der Erfindung sind die wenigstens vier Hauptbänder identisch zueinander gestaltet. Dadurch ist eine vereinfachte und kostengünstige Herstellung der Kettenbänder ermöglicht. Auch eine Herstellung und Montage der erfindungsgemäßen Laufwerkskette wird durch die Gestaltung der Hauptbänder als Gleichteile vereinfacht.

In weiterer Ausgestaltung der Erfindung sind die wenigstens vier Hauptbänder mit wenigstens drei asymmetrisch beidseitig zur Spurführungsebene verteilten Nebenbändern kombiniert, wobei insbesondere ein Nebenband innenseitig der Hauptbänder und wenigstens zwei Nebenbänder außenseitig der Hauptbänder angeordnet sind. Diese Ausgestaltung geht davon aus, dass die Spurführungsebene gegenüber der vertikalen Mittellängsebene jeder Laufwerkskette zur Fahrzeugmitte hin nach innen versetzt ist. Dadurch üben die Kettenstege auf das wenigstens eine innenliegende Nebenband geringere Hebelkräfte aus als auf die außenliegenden Nebenbänder. Durch die asymmetrische Verteilung der Nebenbänder wird diese unterschiedliche Kräfteverteilung ausgeglichen.

In weiterer Ausgestaltung der Erfindung sind die Nebenbänder identisch zueinander gestaltet. Falls auch die Hauptbänder identisch zueinander gestaltet sind, ist es möglich, eine Laufwerkskette aus Kettenbändern in nur zwei unterschiedlichen Ausführungen aufzubauen, wodurch die Bauteilvielfalt für die Laufwerkskette reduziert und demzufolge Herstellung und Montage vereinfacht werden.

In weiterer Ausgestaltung der Erfindung weisen die Nebenbänder eine geringere Breite auf als die Hauptbänder. Dadurch, dass insgesamt wenigstens vier Hauptbänder vorgesehen sind, die die Spurführungsebene symmetrisch flankieren, wird ein Großteil der Kräfte bereits in den Hauptbändern aufgenommen, so dass die Nebenbänder schwächer ausgeführt werden können und demzufolge erfindungsgemäß eine geringere Breite aufweisen können. Material- und Herstellungskosten für die Nebenbänder können hierdurch reduziert werden.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch eine Pistenraupe zur Schneeoberflächenbearbeitung in einer Frontansicht, deren Kettenlaufwerk mit zwei Laufwerksketten versehen ist,
- Fig. 2: in isometrischer Darstellung einen Ausschnitt einer Ausführungsform einer erfindungsgemäßen Laufwerkskette für eine Pistenraupe nach Fig. 1 und
- Fig. 3: eine Draufsicht auf einen Teilbereich der Laufwerkskette nach Fig. 2.

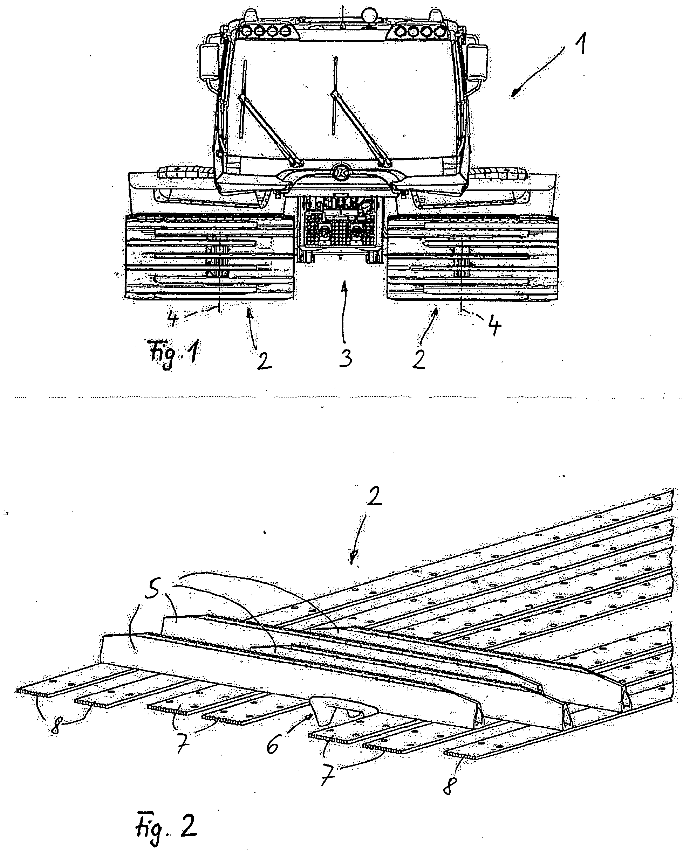

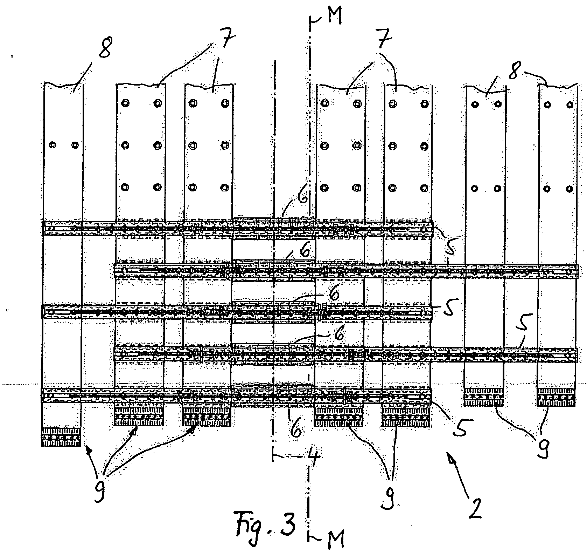

Eine Pistenraupe 1 nach Fig. 1 weist einen Fahrzeugrahmen 3 auf, an den auf gegenüberliegenden Seiten zwei Laufwerksketten 2 eines Kettenlaufwerks anschließen. Jede Laufwerkskette 2 läuft im Fahrbetrieb um ein hinteres Turasrad, ein vorderes Spannrad sowie mehrere Laufräder um, wobei alle zur Kettenführung dienenden Räder in einer gemeinsamen vertikalen Spurführungsebene 4 angeordnet sind. Die Spurführungsebene 4 ist exzentrisch zu einer vertikalen Mittellängsebene jeder Laufwerkskette 2 angeordnet, wobei die Spurführungsebene 4 gegenüber der vertikalen Mittellängsebene nach innen zur Fahrzeugmitte hin, das heißt zum Fahrwerksrahmen 3 hin, versetzt ist. Die Breiten der Laufwerksketten 2 gemäß Fig. 1 sind lediglich schematisch dargestellt. Anhand der Fig. 2 und 3 werden die Laufwerksketten 2 der Pistenraupe 1 nach Fig. 1 näher beschrieben.

Anhand der Fig. 2 ist die in Fig. 1 linke Laufwerkskette 2 und anhand der Fig. 3 die in Fig. 1 rechte Laufwerkskette 2 dargestellt, die spiegelsymmetrisch zueinander, im Übrigen aber identisch zueinander gestaltet sind.

Jede Laufwerkskette 2 gemäß den Fig. 2 und 3 weist mehrere Kettenbänder auf. Die Kettenbänder teilen sich auf in insgesamt vier Hauptbänder 7 sowie in drei Nebenbänder 8, so dass jede Laufwerkskette 2 insgesamt sieben Kettenbänder umfasst. Jedes der Kettenbänder, das heißt sowohl die Hauptbänder 7 als auch die Nebenbänder 8, ist aus einem faserverstärkten Gummibandmaterial hergestellt. Die Faserverstärkung des Gummibandes ist durch Gewebeeinlagen vorgesehen. Jedes Kettenband ist als offener Bandstrang ausgeführt, dessen gegenüberliegende Bandenden für die Erzielung eines geschlossenen, umlaufenden Kettenbandes über eine in Fig. 3 lediglich schematisch dargestellte Kettenschlossanordnung 9 miteinander verbunden werden.

Wie anhand der Fig. 2 und 3 erkennbar ist, sind die vier Haüptbänder 7 breiter gestaltet als die drei Nebenbänder 8. Die vier Hauptbänder 7 sind identisch zueinander gestaltet. In gleicher Weise sind die drei Nebenbänder 8 ebenfalls identisch zueinander gestaltet.

Alle Kettenbänder, das heißt sowohl die Hauptbänder 7 als auch die Nebenbänder 8, tragen eine Vielzahl von Kettensteganordnungen 5, die sich quer zur Kettenlängsrichtung erstrecken und an den Kettenbändern befestigt sind. Jede Kettensteganordnung 5 weist einen Kettensteg auf, der außenseitig auf den Kettenbändern aufliegt. Zudem umfasst jede Kettensteganordnung innenseitig, das heißt zu den Rädern des Kettenfahrwerks hin gerichtet, eine Bandunterlage auf, die sich über die Länge des jeweiligen Kettenstegs quer zur Kettenlängsrichtung erstreckt und gemeinsam mit dem zugehörigen Kettensteg an den Kettenbändern befestigt ist. Jede Kettensteganordnung 5 umfasst zudem im Bereich der Spurführungsebene 4 jeweils einen Spurbügel 6, der auf der den Rädern zugewandten Innenseite an der jeweiligen Kettensteganordnung befestigt ist und über die Räder jeder Fahrwerksseite geführt ist.

Alle Kettensteganordnungen 5 sind an den vier Hauptbändern 7 befestigt. Alle Kettensteganordnungen 5 sind darüber hinaus mit dem innenseitigen Nebenband 8 oder den außenseitigen Nebenbändern 8 verbunden. Dazu sind die Kettensteganordnungen 5, wie anhand der Fig. 2 und 3 erkennbar ist, alternierend nach innen und nach außen versetzt zueinander angeordnet. Jede zweite, nach innen versetzte Kettensteganordnung 5 ist demzufolge an dem innenliegenden Nebenband 8 befestigt. Die alternierend zwischen den nach innen versetzten Kettensteganordnungen 5 liegenden und nach außen versetzten Kettensteganordnungen 5 sind in analoger Weise an den beiden äußeren Nebenbändern 8 befestigt.

Wie insbesondere anhand der Fig. 3 erkennbar ist, sind die vier Hauptbänder 7 spiegelsymmetrisch zu der Spurführungsebene 4 angeordnet, indem jeweils zwei Hauptbänder 7 die Spurführungsebene innenseitig und die beiden anderen Hauptbänder 7 die Spurführungsebene 4 außenseitig parallel flankieren. Die Abstände der innen- und außenliegenden Hauptbänder 7 zur Spurführungsebene 4 sind - spiegelsymmetrisch gesehen - jeweils identisch. Ein Abstand zwischen dem innersten Nebenband 8 und dem benachbarten Hauptband 7 ist größer als der Abstand zwischen den benachbarten Hauptbändern 7 beidseitig der Spurführungsebene 4. Der Abstand des außenliegenden und an das äußere Hauptband 7 anschließenden Nebenbandes 8 zum benachbarten Hauptband 7 ist identisch wie der Abstand des innersten Nebenbandes 8 zum benachbarten Hauptband 7. Der Abstand des außenliegenden Nebenbandes 8 zum benachbarten Nebenband 8 entspricht dem Abstand dieses Nebenbandes 8 zum benachbarten Hauptband 7. Damit sind die Abstände zwischen Hauptbändern 7 und Nebenbändern 8 sowie die Abstände der Nebenbänder 8 zueinander größer als die Abstände der benachbarten Hauptbänder 7 zueinander.

## Patentansprüche

1. Laufwerkskette für eine Pistenraupe mit mehreren Kettenbändern, die in Hauptbänder (7) und Nebenbänder (8) unterteilt sind, sowie mit einer Vielzahl von Kettensteganordnungen (5), die quer zu den Kettenbändern erstreckt und an den Hauptbändern (7) befestigt sind, wobei jede Kettensteganordnung (5) jeweils einen Kettensteg aufweist, die quer zur Kettenlängsrichtung versetzt zueinander angeordnet und alternierend mit relativ zu den Hauptbändern (7) außen- oder innenliegenden Nebenbändern (8) verbunden sind, und wobei die Kettensteganordnungen (5) mit Spurbügeln (6) versehen sind, die in einer gemeinsamen vertikalen Spurführungsebene (4) angeordnet sind, die versetzt zu einer vertikalen Mittellängsebene (M) der Laufwerkskette (2) vorgesehen ist, **dadurch gekennzeichnet, dass** alle Kettenstege der Kettensteganordnungen (5) durch wenigstens vier Hauptbänder (7) getragen sind, die wenigstens paarweise jeweils die durch die Spurbügel (6) definierte vertikale Spurführungsebene (4) innen- und außenseitig flankieren.

2. Laufwerkskette nach Anspruch 1, **dadurch gekennzeichnet, dass** die wenigstens paarweise vorgesehenen Hauptbänder (7) symmetrisch beidseitig der Spurführungsebene (4) angeordnet sind.

3. Laufwerkskette nach Anspruch 1 oder 2, **dadurch gekennzeichnet, dass** die wenigstens vier Hauptbänder (7) identisch zueinander gestaltet sind.

4. Laufwerkskette nach einem der vorhergehenden Ansprüche, **dadurch gekennzeichnet, dass** die wenigstens vier Hauptbänder (7) mit wenigstens drei asymmetrisch beidseitig zur Spurführungsebene (4) verteilten Nebenbändern (8) kombiniert sind, wobei insbesondere ein Nebenband (8) innenseitig der Hauptbänder (7) und wenigstens zwei Nebenbänder (8) außenseitig der Hauptbänder (7) angeordnet sind.

5. Laufwerkskette nach einem der vorhergehenden Ansprüche, **dadurch gekennzeichnet, dass** die Nebenbänder (8) identisch zueinander gestaltet sind.

6. Laufwerkskette nach einem der vorhergehenden Ansprüche, **dadurch gekennzeichnet, dass** die Nebenbänder (8) eine geringere Breite aufweisen als die Hauptbänder (7).

## Claims

1. Crawler chain for a tracked piste grooming vehicle having a plurality of chain belts, subdivided in main belts (7) and secondary belts (8), and having a multitude of chain grouser arrangements (5) extending transversely to the chain belts and being fixed to the main belts (7), wherein each chain grouser arrangement (5) includes one corresponding chain grouser, said grousers being disposed offset relative to each other transversely to the chain longitudinal direction and connected alternatingly to secondary belts (8) located externally or internally in relation to the main belts (7), and wherein the chain grouser arrangements (5) are provided with track bracket members (6), which are disposed in a common vertical track guidance plane (4), said plane being offset in relation to a vertical central longitudinal plane (M) of the crawler chain (2), **characterized in that** all of the chain grousers of the chain grouser arrangements (5) are supported by at least four main belts (7) flanking, at least in pairs, respectively the corresponding vertical track guidance plane (4) defined by the track bracket members (6) on the inside and outside.

2. Crawler chain according to claim 1, **characterized in that** the main belts (7), provided at least in pairs, are disposed symmetrically on both sides of the track guidance plane (4).

3. Crawler chain according to claim 1 or 2, **characterized in that** the at least four main belts (7) have an identical design.

4. Crawler chain according to any one of the preceding claims, **characterized in that** the at least four main belts (7) are combined with at least three secondary belts (8) distributed asymmetrically on both sides of the track guidance plane (4), wherein in particular one secondary belt (8) is disposed on the inside of the main belts (7) and at least two secondary belts (8) are disposed on the outside of the main belts (7).

5. Crawler chain according to any one of the preceding claims, **characterized in that** the secondary belts (8) have an identical design.

6. Crawler chain according to any one of the preceding claims, **characterized in that** the secondary belts (8) have a smaller width than the main belts (7).

## Revendications

1. Chenille pour un véhicule chenillé (dameuse) avec plusieurs bandes de chenille, subdivisées en bandes principales (7) et bandes secondaires (8), ainsi qu'avec une multitude d'arrangements de crampons de chenille (5) s'étendant transversalement par rapport aux bandes de chenille et étant attachés aux bandes principales (7), dans laquelle chacun des arrangements de crampons de chenille (5) comprend un crampon de chenille correspondant, lesdits crampons étant disposés en quinconce transversalement par rapport à la direction longitudinale de la chenille et étant connectés, de façon alternant, à des bandes secondaires (8) à l'extérieur ou à l'intérieur par rapport aux bandes principales (7), et dans laquelle les arrangements de crampons de chenille (5) sont prévus d'étriers de voie (6), lesdits étriers étant disposés dans un plan de guidage de voie (4) vertical commun, le plan étant prévu en quinconce par rapport à un plan médian longitudinal (M) vertical de la chenille (2), **caractérisée en ce que** tous les crampons de chenille des arrangements de crampons de chenille (5) sont supportés par le biais d'au moins quatre bandes principales (7) flanquant, au moins par paires, respectivement le plan de guidage de voie (4) vertical défini par les étriers de voie (6) au côté intérieur et au côté extérieur.

2. Chenille selon la revendication 1, **caractérisée en ce que** les bandes principales (7), prévues au moins par paires, sont disposées symétriquement de part et d'autre du plan de guidage de voie (4).

3. Chenille selon la revendication 1 ou 2, **caractérisée en ce que** les au moins quatre bandes principales (7) présentent une structure identique.

4. Chenille selon l'une quelconque des revendications précédentes, **caractérisée en ce que** les au moins quatre bandes principales (7) sont combinées à au moins trois bandes secondaires (8), distribuées asymétriquement de part et d'autre du plan de guidage de voie (4), dans laquelle en particulier une bande secondaire (8) est disposée au côté intérieur des bandes principales (7) et au moins deux bandes secondaires (8) sont disposées au côté extérieur des bandes principales (7).

5. Chenille selon l'une quelconque des revendications précédentes, **caractérisée en ce que** les bandes secondaires (8) présentent une structure identique.

6. Chenille selon l'une quelconque des revendications précédentes, **caractérisée en ce que** les bandes secondaires (8) présentent une largeur inférieure à celle des bandes principales (7).
